## Europäisches Patentamt

## European Patent Office

## Office européen des brevets

(19)

(11) Veröffentlichungsnummer: **0 109 383**

**B1**

(12) ## EUROPÄISCHE PATENTSCHRIFT

(45) Veröffentlichungstag der Patentschrift:
**15.10.86**

(51) Int. Cl.⁴: **C 21 B 3/08**

(21) Anmeldenummer: **83890196.5**

(22) Anmeldetag: **03.11.83**

(54) **Verfahren zur Gewinnung der fühlbaren Wärme von Schlacke sowie Einrichtung zur Durchführung des Verfahrens.**

(30) Priorität: **16.11.82 AT 4170/82**

(43) Veröffentlichungstag der Anmeldung:
**23.05.84 Patentblatt 84/21**

(45) Bekanntmachung des Hinweises auf die Patenterteilung:
**15.10.86 Patentblatt 86/42**

(84) Benannte Vertragsstaaten:
**BE DE FR GB IT LU NL SE**

(56) Entgegenhaltungen:
**EP-A-0 068 943**
**DE-A-2 558 908**
**DE-A-3 122 059**
**FR-A-2 296 691**
**FR-A-2 400 385**
**FR-A-2 498 310**
**GB-A-2 078 709**

**PATENTS ABSTRACTS OF JAPAN, Band 2, Nr. 69, 25. Mai 1978, Seite 1460 M 78**
**PATENTS ABSTRACTS OF JAPAN, Band 2, Nr. 122, 13. Oktober 1978, Seite 2361 C 78**

(73) Patentinhaber: **VOEST- ALPINE Aktiengesellschaft, Muldenstrasse 5, A-4020 Linz (AT)**

(72) Erfinder: **Der Erfinder hat auf seine Nennung verzichtet**

(74) Vertreter: **Wolfram, Gustav, Dipl.- Ing., Schwindgasse 7 P.O. Box 205, A-1041 Wien (AT)**

## Beschreibung

Die Erfindung betrifft ein Verfahren zur Gewinnung der fühlbaren Wärme von Schlacke, insbesondere von Hochofenschlacke, wobei die flüssige Schlacke an der Oberfläche eines hohlen, mit einer Flüssigkeitsinnenkühlung versehenen Kühlkörpers, der vorzugsweise als Kühltrommel ausgebildet ist, erstarren gelassen und durch die Flüssigkeitsinnenkühlung indirekt auf eine Temperatur knapp unterhalb der Erstarrungstemperatur abgekühlt wird, und die erstarrte Schlacke in einem zweiten Kühlschritt mittels eines Gasstromes direkt abgekühlt wird, wobei der erwärmte Gasstrom in einem thermodynamischen Kreisprozeß geführt wird, sowie eine Einrichtung zur Durchführung des Verfahrens.

Ein Verfahren der eingangs beschriebenen Art ist aus der DE-B - 25 58 908 bekannt. Die Schlacke wird in einem ersten Kühlschritt auf eine Temperatur von etwa 1000°C abgekühlt, indem sie in das Innere einer flüssigkeitsgekühlten Trommel eingegossen wird. In der Trommel kommt es zu einem gewollten Abheben der Schlacke, wodurch der Wärmetransport der Schlacke zum Trommelmantel empfindlich gestört ist, so daß die Abkühlgeschwindigkeit nur gering ist und eine glasige Erstarrung der Schlacke nicht gesichert ist. Eine Rückgewinnung der bei diesem Kühlschritt von der Schlacke abgegebenen Wärme ist hierbei nicht vorgesehen.

Ein Verfahren zur Gewinnung der fühlbaren Wärme von Schlacke ist weiters aus der DE-A - 31 22 059 bekannt. Gemäß der DE-A - 31 22 059 wird die Schlacke zwischen zwei mit einer Innenkühlung versehenen Trommeln gegossen, wobei sich die Trommeloberflächen im Berührungsabschnitt mit der Schlacke aufwärtsbewegen, so daß die Schlacke lange Zeit mit den Trommeln in Berührung steht und auf eine niedrige Temperatur abgekühlt wird. Die über mehr als 3/4 der Trommeloberflächen an den Trommeln haftende Schlacke läßt sich nur schwierig und unter Bildung relativ großer Schlackenstücke von den Trommeln lösen. Die Trommeln werden durch die sie bedeckende Schlacke auf eine relativ hohe Temperatur aufgeheizt. Der Temperaturgradient ist am Beginn der Abkühlung sehr klein und steigt erst nach einer gewissen Zeit an, wodurch eine erwünschte glasige Erstarrung der Schlacke nicht sichergestellt ist.

Ein weiteres Verfahren zur Gewinnung der fühlbaren Wärme der Schlacke ist aus der DE-A - 27 59 205 bekannt. Bei diesem Verfahren wird die Schlacke auf ein sogenanntes Schleuderrad gegossen, welches Schleuderrad die Schlacke mechanisch zerstäubt und wegschleudert. Während des Weges der Schlacke durch die Luft nach dem Wegschleudern kühlt die Schlacke und es entsteht an den Schlackenteilchen eine dünne, jedoch noch weiche Haut. Während des relativ kurzen Fluges der Schlackenteilchen durch die Luft ist eine Durcherstarrung derselben nicht garantiert, so daß die Schlackenteilchen beim nachfolgenden Aufeinandertreffen zum Zusammenbacken neigen. Es ist daher notwendig, ein pulverförmiges Trennmittel zuzusetzen, welches Trennmittel, das zum Teil an den Schlackenteilchen kleben bleibt, die Verwendungsmöglichkeiten der Schlacke einschränkt und wegen des Klebens an den Schlackenteilchen nicht zur Gänze im Kreislauf geführt werden kann; es muß laufend ersetzt werden.

Gemäß der DE-A - 27 59 205 gelangen die Schlackenteilchen gemeinsam mit dem Trennmittel in einen Behälter, der von unten nach oben von Luft durchströmt wird, die die Schlackenteilchen abkühlt. Die von den Schlackenteilchen erwärmte Luft dient nach Durchlaufen eines Zyklonenscheiders zur Erwärmung eines Mediums in einem Wärmetauscher.

In dem durch die Schlackenteilchen infolge des Luftdurchtrittes gebildeten Fließbett innerhalb des Behälters ist ein Wärmetauscherrohr angeordnet, welches einem starken mechanischen Verschleiß unterliegt.

Abgesehen davon, daß bei diesem bekannten Verfahren die glasige Erstarrung der Schlacke ebenfalls nicht sichergestellt ist und ein Trennmittel verwendet werden muß, ist auch die Wärmerückgewinnung wegen der überwiegenden Luftkühlung nur unvollständig.

Die Erfindung bezweckt die Vermeidung dieser Nachteile und Schwierigkeiten und stellt sich die Aufgabe, ein Verfahren sowie eine Vorrichtung zur Durchführung des Verfahrens zu schaffen, welche eine möglichst vollständige Gewinnung der fühlbaren Wärme der Schlacke ermöglichen, wobei jedoch ein hoher Prozentsatz glasiger Anteile der Schlacke und eine gute Mahlbarkeit der Schlacke sichergestellt sind.

Diese Aufgabe wird erfindungsgemäß dadurch gelöst, daß die flüssige Schlacke an der Oberfläche des Kühlkörpers intensiv gekühlt wird, daß das flüssige Kühlmedium der Flüssigkeitsinnenkühlung ebenfalls in einem thermodynamischen Kreisprozeß geführt wird und die vom Gasstrom aufgenommene Wärme dem von der Schlacke erwärmten flüssigen Kühlmedium zugeführt wird.

Gemäß einer bevorzugten Ausführungsform, die eine besonders hohe Wärmeausbeute ermöglicht, wird das flüssige Kühlmedium in einem geschlossenen Kreislauf unter erhöhtem Druck geführt und weiters zweckmäßig der Gasstrom in einem geschlossenen Kreislauf geführt.

Eine Einrichtung zur Durchführung des Verfahrens mit einem von einem flüssigen Kühlmedium durchströmten, einen Hohlraum aufweisenden Kühlkörper, vorzugsweise einer Kühltrommel, und mindestens einer zur Oberfläche des Kühlkorpers reichenden Schlackenzuführleitung, wobei ein im wesentlichen vertikaler, von der von der Oberfläche des Kühlkörpers gelösten Schlacke durchsetzter Behälter vorgesehen ist, in den nahe seinem unteren Ende eine Kühlgaseintrittsleitung und nahe seinem oberen Ende eine Kühlgasaustrittsleitung münden, wobei die Kühlgasaustrittsleitung an einen Wärmeumsetzer eines thermodynamischen Kreisprozesses angeschlossen ist, ist dadurch gekennzeichnet, daß der Hohlraum des Kühlkörpers leitungsmäßig mit einem Wärmeumsetzer eines thermodynamischen Kreisprozesses mittels einer in den Hohlraum mündenden Ableitung für das flüssige Kühlmedium verbunden ist und der Wärmeumsetzer des thermodynamischen Kreisprozesses des Kühlgases von der Ableitung für das flüssige Kühlmedium durchsetzt ist.

Durch die Abgabe der durch den Gasstrom aufgenommenen Wärme an das den Kühlkörper durchsetzende flüssige Kühlmedium läßt sich eine besonders effiziente Gewinnung der fühlbaren Wärme der Schlacke verwirklichen, da es möglich ist, das flüssige Kühlmittel im Kühlkörper unter Bedingungen zu führen, bei denen eine Dampfblasenbildung und damit eine schlechte Kühlwirkung verhindert wird. Das sich nach Durchtritt durch den Kühlkörper zunächst nur auf einem niedrigen Temperaturniveau befindende flüssige Kühlmittel wird durch die vom Gasstrom aufgenommene Wärme auf ein höheres Temperaturniveau gebracht, so daß eine rentable Wärmerückgewinnung möglich ist.

Gemäß einer bevorzugten Ausführungsform ist der Kühlkörper von zwei gegensinnig angetriebenen Gießwalzen gebildet und ist der Kühlkörper weiters im Inneren des Behälters nahe dessen oberem Ende angeordnet.

Zweckmäßig ist die Ableitung für das flüssige Kühlmedium mit einer in den Hohlraum des Kühlkörpers mündenden Kühlflüssigkeitszufuhrleitung zu einem geschlossenen Kreislauf verbunden und ist weiters die Kühlgaseintrittsleitung mit der Kühlgasaustrittsleitung über den Wärmeumsetzer zu einem geschlossenen Kreislauf verbunden.

Eine besonders günstige Erstarrung der Schlacke ist dann ermöglicht, wenn der Kühlkörper mit in Umfangsrichtung verlaufenden Erhebungen und Vertiefungen versehen ist, wobei zweckmäßig die Vertiefungen als sich über den Umfang des Kühlkörpers erstreckende Rillen mit sich zur Oberfläche hin erweiterndem Querschnitt ausgebildet sind.

Zur Bildung von Schlackenkörpern bestimmter Größe sind zweckmäßig die Oberflächen der Gießwalzen mit einander gegenüberliegenden Vertiefungen versehen, die einander zu einem allseits geschlossenen Formhohlraum ergänzen, wobei vorteilhaft die Vertiefungen halbkugelförmig gestaltet sind.

Um den Gasdurchtritt durch die im Behälter liegende Schlacke einwandfrei sicherzustellen, ist vorteilhaft der Behälter an seinem unteren Ende mit einer gegenüber dem Behälter im Querschnitt erweiterten Kühlgaseintrittskammer versehen.

Zur Vermeidung von Heißgasverlusten über eine Schlackenaustragsvorrichtung mündet unterhalb der Schlackenaustragsvorrichtung eine Sekundärgasleitung ein, durch die Gas mit größerem Druck einpreßbar ist als in die Kühlgaseintrittskammer.

Um eine gute Kühlung des Kühlkörpers sicherzustellen, ist der Kühlkörper gegenüber dem Behälterinnenraum mittels eines flüssigkeitsgekühlten Strahlungsschutzschirmes abgedeckt, wobei der Strahlungsschutzschirm leitungsmäßig mit dem Hohlraum des Kühlkörpers verbunden ist.

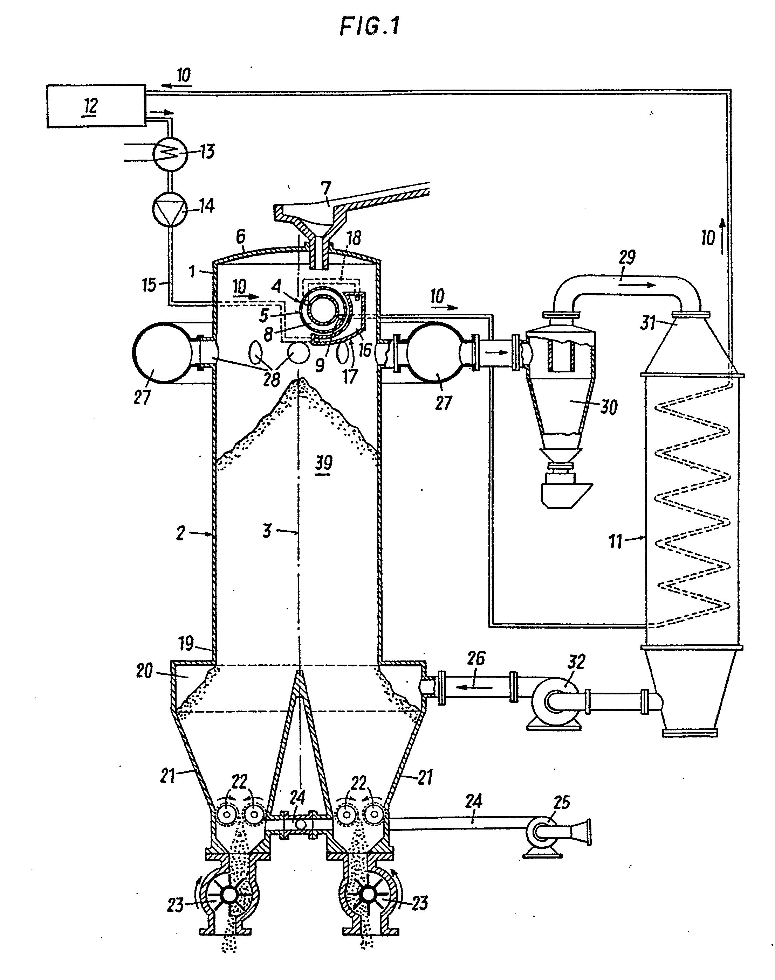

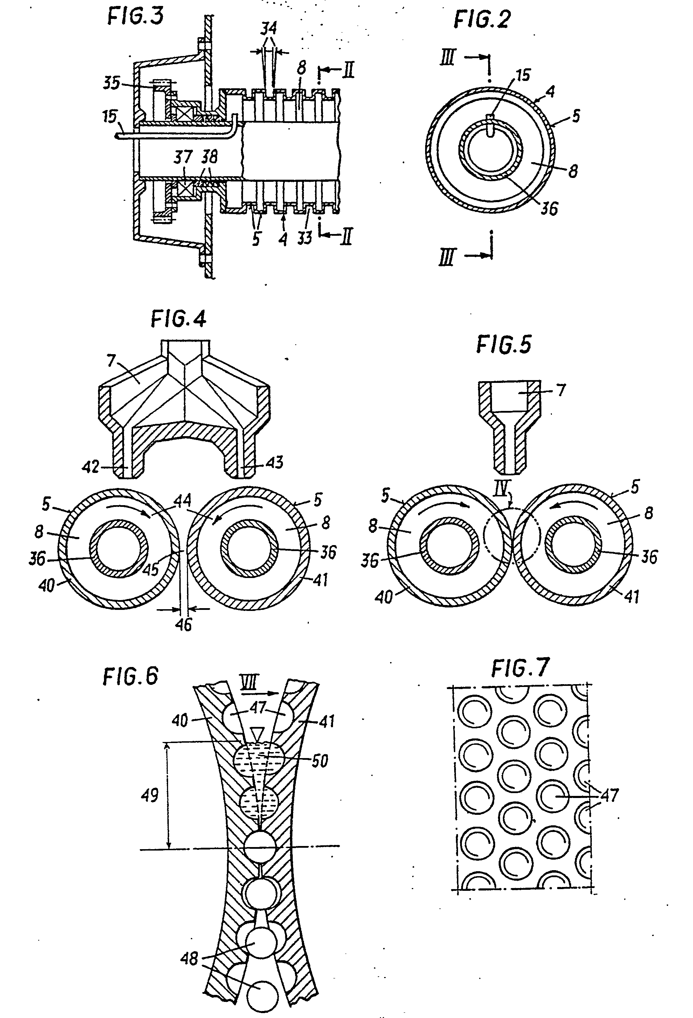

Die Erfindung ist nachfolgend anhand mehrerer Ausführungsformen näher erläutert, wobei Fig. 1 eine erfindungsgemäße Einrichtung im Schnitt und Fig. 2 ein Detail der Fig. 1 in größerem Maßstab (gemäß der Linie II-II der Fig. 3) zeigen. Fig. 3 ist die Darstellung eines gemäß der Linie III-III der Fig. 2 geführten Schnittes. In den Fig. 4 und 5 sind in zu Fig. 2 analoger Darstellung weitere Ausführungsformen veranschaulicht. Fig. 6 zeigt ein Detail VI der Fig. 5 in größerem Maßstab. Fig. 7 veranschaulicht eine Ansicht der Oberfläche der in den Fig. 5 und 6 dargestellten Kühlkörper in Richtung des Pfeiles VII der Fig. 6.

Nahe dem oberen Ende 1 eines allseits geschlossenen, nachfolgend auch als Kühlturm bezeichneten Behälters 2 von im wesentlichen zylindrischer Form mit vertikaler Achse 3 ist ein als Kühltrommel ausgebildeter Kühlkörper 4 drehbar gelagert. Zu der Oberfläche 5 dieses Kühlkörpers 4 ist durch den Deckel 6 des Behälters 2 hindurch eine Schlackenzulaufrinne 7 gerichtet. Der Kühlkörper 4 ist mit einer Innenkühlung für ein flüssiges Medium versehen. In seinen Hohlraum 8 mündet eine die Kühlflüssigkeit ableitende Rohrleitung 9 (Ableitung), die in Flußrichtung 10 der Kühlflüssigkeit zu einem Wärmetauscher 11 führt und von diesem zu einem Wärmeverbraucher 12 und weiter zu einem Kondensator 13 und zu einer Pumpe 14 geleitet ist. Von dieser Pumpe 14 aus mündet eine Kühlflüssigkeitszufuhrleitung 15 in einen Hohlraum 16 eines von der Kühlflüssigkeit durchflossenen Strahlungsschutzschirmes 17, nach dessen Durchströmen die Kühlflüssigkeit über die Kühlflüssigkeitszufuhrleitung 18 dem Hohlraum 8 des Kühlkörpers 4 zugeführt wird.

Der gegebenenfalls mit einer Wandkühlung versehene Kühlturm 2 geht an seinem unteren Ende 19 in eine im Querschnitt senkrecht zur Achse 3 erweiterte Kühlgaseintrittskammer 20 über, die nach unten zu konisch verengte Trichter 21 aufweist. An den Trichtern 21 sind Schlackenaustragsvorrichtungen 22 angeschlossen, die im dargestellten Ausführungsbeispiel als Stachelwalzen ausgebildet sind und auch zum Brechen der Schlacke dienen. Unterhalb der Stachelwalzen sind Taschenräder 23 vorgesehen, mit denen ein dosiertes Abgeben der Schlackenteilchen möglich ist. Knapp unterhalb der Stachelwalzen 22 mündet eine Gasleitung 24 in die Trichter 21, durch die Kühlgas, wie Kühlluft, mittels eines Gebläses 25 in die Trichter 21 einpreßbar ist.

In die im Querschnitt gegenüber dem Kühlturm 2 erweiterte Kühlgaseintrittskammer 20 mündet eine Kühlgaseintrittsleitung 26. Knapp unterhalb des Kühlkörpers 4 ist der Kühlturm von einer Ringleitung 27 umgeben, die als Sammelleitung für das den Kühlturm 2 von unten nach oben durchströmende Kühlgas dient. Dieses Kühlgas verläßt den Kühlturm durch Öffnungen 28.

Von der Ringleitung 27 aus ist eine Kühlgasaustrittsleitung 29 zu einem Zyklonen-Staubabscheider 30 geführt, von dem die Gasleitung 29 zu einem Ende 31 des vom flüssigen Kühlmedium im Gegenstrom zum Gas durchströmten Wärmetauschers 11 geleitet ist. Am gegenüberliegenden Ende des Wärmetauschers 11 tritt das Kühlgas aus diesem aus und wird von einem Ventilator 32 wiederum der Kammer 20 zugeleitet, so daß das Kühlgas ebenso wie die Kühlflüssigkeit zum Kühlen des Kühlkörpers in einem geschlossenen Kreislauf geführt ist.

Die Oberfläche 5 des Kühlkörpers 4 ist, wie aus Fig. 3 ersichtlich, mit Umfangsrillen 33 ausgestattet. Diese Umfangsrillen erweitern sich radial nach außen mit einem Winkel 34 von etwa 2° gegenüber der radialen Richtung. Der Antrieb des Kühlkörper 4 erfolgt über einen Zahnkranz 35. Wie aus Fig. 3 ebenfalls ersichtlich ist, ist der als Kühltrommel ausgebildete Kühlkörper 4 an einer rohrförmigen Achse 36 mittels eines Lagers 37 drehbar gelagert, und die durch die Kühlmittelzufuhrleitung 15 zugeführte Kühlflüssigkeit fließt in den von der Achse 36 und der Trommel gebildeten ringförmigen Hohlraum 8. Mit 38 sind Dichtungen zwischen der Achse 36 und der Kühltrommel bezeichnet.

Die Funktion der Einrichtung ist folgende:

Die über die Schlackenrinne 7 der Oberfläche 5 des Kühlkörpers 4 zugeführte, eine Temperatur von etwa 1550° C aufweisende Schlacke wird vom Kühlkörper 4 auf etwa 1100° C abgekühlt, d.h. daß die Schlacke an der Oberfläche des Kühlkörpers 4 erstarrt. Der Kühlkörper 4 wird mittels eines nicht dargestellten Drehantriebes in Drehung versetzt. Nach Durcherstarren der Schlacke platzt die Schlacke von dem Kühlkörper 4 ab.

Die abgeplatzte Schlacke 39 wird in dem Kühlturm 2 und den Trichtern 21 gesammelt und durch den Kühlgasstrom, vorzugsweise durch einen Luftstrom, von 1100° C auf etwa 200° C weiter abgekühlt. Die unterhalb der Stachelwalzen 22 einmündende weitere Kühlluft kühlt die Schlacke, nachdem sie von den Stachelwalzen zerkleinert wurde, um weitere 100° C auf etwa 100° C ab.

Die durch den Kühlturm 2 aufsteigende Kühlluft, die von der Schlacke erwärmt ist, gelangt über die Ringleitung 27 und den Zyklonen-Staubabscheider 30 zu dem Wärmetauscher 11, in dem sie ihre Wärme an die den Wärmetauscher 11 im Gegenstrom durchsetzende Kühlflüssigkeit abgibt.

Die Kühlflüssigkeit wird somit nicht nur durch die von der Schlacke über den Kühlkörper und den Strahlungsschutzschirm 17 an sie abgegebene Wärme erwärmt, sondern es wird ihr zusätzlich die Wärme, die das Kühlgas von der Schlacke aufgenommen hat, zugeführt. Da der Kühlkörper 4 zusätzlich zur Innenkühlung mittels eines Strahlungsschutzschirmes 17 auch zumindest über 180° seines Umfanges mit einer Außenkühlung versehen ist, ist der Kühlkörper sehr effektiv gekühlt, so daß eine glasige Erstarrung der Schlacke nach Kontaktierung der Oberfläche 5 des Kühlkörpers 4 sichergestellt und ein Zusammenbacken der von der Kühlkörperoberfläche 5 abplatzenden Schlacke verhindert ist. Die nicht von selbst abplatzende Schlacke wird vom Strahlungsschutzschirm, der mit sich der Form der Trommel anpassenden Klauen an die Oberfläche 5 des Kühlkörpers 4 geführt ist, abgekratzt.

Das Kühlwasser wird mit etwa 30° C dem Strahlungsschutzschirm 17 mittels der Pumpe 14 zugeleitet, tritt nach Durchströmen des Strahlungsschutzschirmes 17 mit etwa 70° C in den Kühlkörper ein und aus diesem mit etwa 180° C und einem Druck von 10 bar aus. Durch den erhöhten Druck wird eine Blasenbildung innerhalb des Kühlkörpers 4 vermieden und ein guter Wärmeübergang zur Kühlflüssigkeit gesichert, so daß die Schlacke bereits ab etwa 1/10 des Trommelumfanges des Kühlkörpers 4 durcherstarrt ist.

Die Kühlluft tritt mit etwa 200° C in die Kammer 20 ein und wird von der Schlacke auf etwa 600° C, mit welcher Temperatur das Kühlgas den Kühlturm 2 verläßt, erhitzt. Der Ventilator 32 preßt mit etwa 1,5 bar das Kühlgas in die Kühlgaseintrittskammer 20 ein und saugt es mit einem geringen Unterdruck von etwa 0,5 bar aus dem Wärmetauscher 11 an. Das unterhalb der Stachelwalzen 22 zugeleitete weitere Kühlgas wird mit einem etwas größeren Druck als 1,5 bar eingepreßt, um eine Abdichtung der Trichter 21 nach unten sicherzustellen und die dem System entweichende Luft zu ersetzen.

Der Wärmetauscher 11 arbeitet im Gegenstromprinzip, wobei das mit etwa 180° C in den Wärmetauscher 11 eingeleitete Wasser verdampft. Der Dampf verläßt mit etwa 600° C den Wärmetauscher 11 und wird mit dieser Temperatur dem Verbraucher zugeführt. Das Kühlgas verläßt den Wärmetauscher 11 mit etwa 200° C. Der durch den Wärmeverbraucher 12 abgearbeitete Dampf wird im gegebenenfalls erforderlichen Kondensator 13 auf etwa 30° C abgekühlt und verflüssigt.

Die Besonderheit des erfindungsgemäßen Verfahrens ist darin zu sehen, daß die Schlacke in zwei Schritten abgekühlt wird. Der erste Kühlschritt erfolgt durch eine indirekte Flüssigkeitskühlung über die gut gekühlte Oberfläche 5 des Kühlkörpers 4 bis knapp unterhalb der Erstarrungstemperatur, wobei wichtig ist, daß die Schlacke glasig durcherstarrt. Der zweite Kühlschritt erfolgt von etwa 1100° C abwärts durch eine direkte Gaskühlung. Mit dem ersten Schritt erfolgt ein schroffes Abkühlen, wodurch die glasige Erstarrung und die Durcherstarrung sichergestellt sind. Im zweiten Schritt erfolgt die nahezu vollständige Wärmeübergabe von der Schlacke auf das Kühlgas.

Der unmittelbare Kontakt des Schlackenstrahles mit der gekühlten Oberfläche 5 des Kühlkörpers 4 ermöglicht durch das Wärmespeichervermögen des Werkstoffes des Kühlkörpers 4 und des Verhältnisses Kühlkörpergewicht zu abzukühlender Schlacke von ca. 2: 1 die extrem schnelle Abkühlung der Schlacke. Es ist von Bedeutung, daß die Oberfläche 5 über 3/4 ihres Umfanges schlackenfrei ist und etwa über die Hälfte ihres Umfanges mittels eines Strahlungsschutzschirmes 17 von außen ebenfalls gekühlt wird.

In Fig. 4 ist ein Ausführungsbeispiel dargestellt, bei dem als Kühlkörper zwei gegensinnig angetriebene, als Gießwalzen fungierende Kühltrommeln 40, 41 vorgesehen sind, wobei die Schlackenzuführrinne 7 mit zwei Mündungen 42, 43 versehen ist. Die Kühltrommeln 40, 41 drehen sich von oben gesehen mit ihren Oberflächen 5 zueinander (in Richtung der Pfeile 44). Zwischen den Kühltrommeln 40, 41 ist ein Spalt 45 mit bestimmter Breite 46 vorgesehen; dieser Spalt 45 ermöglicht den Durchtritt der Schlacke. Die Mündungen 42, 43 der Schlackenrinne 7 liegen jeweils in Bewegungsrichtung 44 knapp neben der höchsten Erhebung der Kühltrommeln 40, 41, so daß die Schlacke mit Sicherheit in Richtung zur jeweils gegenüberliegenden Kühltrommel mitgenommen wird und ein Überrinnen der Schlacke nach außen vermieden wird.

Es ist möglich, die Kühltrommeln 40, 41 mit glatter Oberfläche 5 auszustatten, wie in Fig. 4 dargestellt ist, oder beide Kühltrommeln mit Umfangsrillen 33 gemäß Fig. 3 zu versehen, wobei in jeweils eine Rille 33 eine Erhebung der gegenüberliegenden Kühltrommel hineinragt.

Gemäß der in den Fig. 5 und 6 dargestellten Ausführungsform berühren die Oberflächen 5 der Kühltrommeln 40, 41 einander. Sie sind mit Vertiefungen 47, die etwa halbkugelförmig gestaltet sind, ausgestattet, wobei sich die Vertiefungen 47 der beiden gegenüberliegenden Kühltrommeln an der Berührungslinie zu kugelförmigen Hohlräumen ergänzen, so daß Schlackenteilchen 48 in der Größe dieser kugelförmigen Hohlräume gebildet werden. Der Schlackenzufluß wird so groß gehalten, daß die Höhe 49 des zwischen den Kühltrommeln 40, 41 entstehenden Schlackensumpfes 50 möglichst gering ist.

## Patentansprüche

1. Verfahren zur Gewinnung der fühlbaren Warme von Schlacke (39), insbesondere von Hochofenschlacke, wobei die flüssige Schlacke an der Oberfläche (5) eines hohlen, mit einer Flüssigkeitsinnenkühlung versehenen Kühlkörpers (4; 40, 41), der vorzugsweise als Kühltrommel ausgebildet ist, erstarren gelassen und durch die Flüssigkeitsinnenkühlung indirekt auf eine Temperatur knapp unterhalb der Erstarrungstemperatur abgekühlt wird, und die erstarrte Schlacke (39) in einem zweiten Kühlschritt mittels eines Gasstromes direkt abgekühlt wird, wobei der erwärmte Gasstrom in einem thermodynamischen Kreisprozeß geführt wird, dadurch gekennzeichnet, daß die flüssige Schlacke an der Oberfläche (5) des Kühlkörpers (4; 40, 41) intensiv gekühlt wird, daß das flüssige Kühlmedium der Flüssigkeitsinnenkühlung ebenfalls in einem thermodynamischen Kreisprozeß geführt wird und die vom Gasstrom aufgenommene Wärme dem von der Schlacke (39) erwärmten flüssigen Kühlmedium zugeführt wird.

2. Verfahren nach Anspruch 1, dadurch gekennzeichnet, daß das flüssige Kühlmedium in einem geschlossenen Kreislauf (9, 11, 12, 13, 14, 15, 16, 17, 18, 8, 4) unter erhöhtem Druck geführt wird.

3. Verfahren nach Anspruch 1 oder 2, dadurch gekennzeichnet, daß der Gasstrom in einem geschlossenen Kreislauf (28, 27, 29, 30, 11, 32, 26, 20, 2) geführt wird.

4. Einrichtung zur Durchführung des Verfahrens nach den Ansprüchen 1 bis 3, mit einem von einem flüssigen Kühlmedium durchströmten, einen Hohlraum (8) aufweisenden Kühlkörper (4; 40, 41), vorzugsweise einer Kühltrommel, und mindestens einer zur Oberfläche (5) des Kühlkörpers reichenden Schlackenzuführleitung (7, 42, 43), wobei ein im wesentlichen vertikaler, von der von der Oberfläche (5) des Kühlkörpers (4; 40, 41) gelösten Schlacke (39) durchsetzter Behälter (2) vorgesehen ist, in den nahe seinem unteren Ende (19) eine Kühlgaseintrittsleitung (26) und nahe seinem oberen Ende (1) eine Kühlgasaustrittsleitung (29) münden, wobei die Kühlgasaustrittsleitung (29) an einen Wärmeumsetzer (11) eines thermodynamischen Kreisprozesses angeschlossen ist, dadurch gekennzeichnet, daß der Hohlraum (8) des Kühlkörpers (4; 40, 41) leitungsmäßig mit einem Wärmeumsetzer (12) eines thermodynamischen Kreisprozesses mittels einer in den Hohlraum (8) mündenden Ableitung (9) für das flüssige Kühlmedium verbunden ist und der Wärmeumsetzer (11) des thermodynamischen Kreisprozesses des Kühlgases von der Ableitung (9) für das flüssige Kühlmedium durchsetzt ist.

5. Einrichtung nach Anspruch 4, dadurch gekennzeichnet, daß der Kühlkörper von zwei gegensinnig angetriebenen Gießwalzen (40, 41) gebildet ist.

6. Einrichtung nach Anspruch 4 oder 5, dadurch gekennzeichnet, daß der Kühlkörper (4; 40, 41) im Inneren des Behälters (2) nahe dessen oberem Ende (1) angeordnet ist.

7. Einrichtung nach den Ansprüchen 4 bis 6, dadurch gekennzeichnet, daß die Ableitung (9) für das flüssige Kühlmedium mit einer in den Hohlraum (8) des Kühlkörpers (4; 40, 41) mündenden Kühlflüssigkeitszufuhrleitung (18) zu einem geschlossenen Kreislauf verbunden ist.

8. Einrichtung nach den Ansprüchen 4 bis 7, dadurch gekennzeichnet, daß die Kühlgaseintrittsleitung (26) mit der Kühlgasaustrittsleitung (29) über den Wärmeumsetzer (11) zu einem geschlossenen Kreislauf verbunden ist.

9. Einrichtung nach den Ansprüchen 4 bis 8, dadurch gekennzeichnet, daß der Kühlkörper (4; 40, 41) mit in Umfangsrichtung verlaufenden Erhebungen und Vertiefungen (33) versehen ist.

10. Einrichtung nach Anspruch 9, dadurch gekennzeichnet, daß die Vertiefungen als sich über den Umfang des Kühlkörpers (4; 40, 41) erstreckende Rillen (33) mit sich zur Oberfläche (5) hin erweiterndem Querschnitt ausgebildet sind.

11. Einrichtung nach den Ansprüchen 5 bis 10, dadurch gekennzeichnet, daß die Oberflächen (5) der Gießwalzen (40, 41) mit einander gegenüberliegenden Vertiefungen (47) versehen sind, die einander zu einem allseits geschlossenen Formhohlraum ergänzen.

12. Einrichtung nach Anspruch 11, dadurch gekennzeichnet, daß die Vertiefungen (47) halbkugelförmig gestaltet sind.

13. Einrichtung nach den Ansprüchen 4 bis 12, dadurch gekennzeichnet, daß der Behälter (2) an seinem unteren Ende (19) mit einer gegenüber dem Behälter im Querschnitt erweiterten Kühlgaseintrittskammer (20) versehen ist.

14. Einrichtung nach Anspruch 13, dadurch gekennzeichnet, daß am unteren Ende der Kühlgaseintrittskammer (20) eine Schlackenaustragsvorrichtung (22), wie Stachelwalzen, vorgesehen ist und daß unterhalb der Schlackenaustragsvorrichtung (22) eine weitere Gasleitung (24) einmündet, durch die Gas mit größerem Druck einpreßbar ist als in die Kühlgaseintrittskammer (20).

15. Einrichtung nach den Ansprüchen 4 bis 14, dadurch gekennzeichnet, daß der Kühlkörper (4; 40, 41) gegenüber dem Behälterinnenraum mittels eines flüssigkeitsgekühlten Strahlungsschutzschirmes (17) abgedeckt ist, wobei der Strahlungsschutzschirm (17) leitungsmäßig mit dem Hohlraum (8) des Kühlkörpers (4; 40, 41) verbunden ist.

**Claims**

1. A method for recovering the sensible heat of slag (39), in particular of blast furnace slag, wherein the liquid slag is allowed to solidify on the surface (5) of a hollow cooling body (4; 40, 41) provided with a liquid internal cooling, preferably designed as a cooling drum,and is indirectly cooled by the liquid internal cooling to a temperature closely below the solidification temperature and the solidified slag (39),in a second cooling step, is directly cooled by means of a gas flow, the heated gas flow being guided in a thermodynamic recirculation process, characterised in that the liquid slag is intensively cooled on the surface (5) of the cooling body (4; 40, 41), that the liquid cooling medium of the liquid internal cooling also is guided in a thermodynamic recirculation process and that the heat absorbed by the gas flow is supplied to the liquid cooling medium heated by the slag (39).

2. A method according to claim 1, characterised in that the liquid cooling medium is guided in a closed circuit (9, 11, 12, 13, 14, 15, 16, 17, 18, 8, 4) under elevated pressure.

3. A method according to claim 1 or 2, characterised in that the gas flow is guided in a closed circuit (28, 27, 29, 30, 11, 32, 26, 20, 2).

4. An arrangement for carrying out the method according to claims 1 to 3, comprising a cooling body (4; 40, 41) defining a cavity (8), preferably a cooling drum,through which a liquid coolant flows, and at least one slag supply duct (7, 42, 43) reaching to the surface (5) of the cooling body, wherein a substantially vertical vessel (2) passed through by the slag (39) separated from the surface (5) of the cooling body (4; 40, 41) is provided, into which a cooling gas entry duct (26) enters near its lower end (19) and a cooling gas exit duct (29) enters near its upper end (1), and the cooling gas exit duct (29) is connected to a heat transformer (11) of a thermodynamic recirculation process, characterised in that the cavity (8) of the cooling body (4; 40, 41) is connected in duct-like manner with a heat transformer (12) of a thermodynamic recirculation process by means of a drainage (9) for the liquid cooling medium, which enters into the cavity (8), and the heat transformer (11) of the thermodynamic recirculation process of the cooling gas is penetrated by the drainage (9) for the liquid coolant.

5. An arrangement according to claim 4, characterised in that the cooling body is formed by two counterwisely driven casting rolls (40, 41).

6. An arrangement according to claim 4 or 5, characterised in that the cooling body (4; 40, 41) is arranged in the interior of the vessel (2) near its upper end (1).

7. An arrangement according to claims 4 to 6, characterised in that the drainage (9) for the liquid coolant is connected into a closed circuit with a cooling-liquid supply duct (18) entering into the cavity (8) of the cooling body (4; 40, 41).

8. An arrangement according to claims 4 to 7, characterised in that the cooling gas entry duct (26) is connected into a closed circuit with the cooling gas exit duct (29) via the heat transformer (11).

9. An arrangement according to claims 4 to 8, characterised in that the cooling body (4; 40, 41) is provided with elevations and concavities (33) extending in the peripheral direction.

10. An arrangement according to claim 9, characterised in that the concavities are designed as grooves (33) extending over the periphery of the cooling body (4; 40, 41) and having cross sections widening towards the surface (5).

11. An arrangement according to claims 5 to 10, characterised in that the surfaces (5) of the casting rolls (40, 41) are provided with opposite concavities (47) that complement each other to form a mould cavity closed on all sides.

12. An arrangement according to claim 11, characterised in that the concavities (47) are semi-spherically designed.

13. An arrangement according to claims 4 to 12, characterised in that the vessel (2), on its lower end (19),is provided with a cooling gas entry chamber (20) widened in terms of cross section with respect to the vessel.

14. An arrangement according to claim 13, characterised in that a slag discharge means (22), such as spike rollers, is provided on the lower end of the cooling gas entry chamber (20) and that a further gas duct (24) enters below the slag discharge means (22), through which gas may be injected at a higher pressure than into the cooling gas entry chamber (20).

15. An arrangement according to claims 4 to 14, characterised in that the cooling body (4; 40, 41) is covered by means of a liquid-cooled radiation protection screen (17) relative to the vessel interior, the radiation protection screen (17) being connected in duct-like manner with the cavity (8) of the cooling body (4; 40, 41).

**Revendications**

Procédé de récupération de la chaleur sensible du laitier (39), et en particulier du laitier de haut fourneau, et dans lequel le laitier liquide se solidifie sur la surface (5) d'un refroidisseur (4; 40, 41) creux, muni d'un refroidissement intérieur par liquide et réalisé de préférence en tambour refroidisseur, et est refroidi indirectement par le liquide à refroidissement intérieur, à une température légèrement inférieure à celle de solidification, puis le laitier solidifié (39) est refroidi directement par un flux gazeux, au cours d'une seconde phase de refroidissement, le flux gazeux réchauffé étant soumis à un cycle thermodynamique, ledit procédé étant caractérisé en ce que le laitier liquide subit un refroidissement intense sur la surface (5) du refroidisseur; l'agent liquide de refroidissement intérieur est également soumis à un cycle thermodynamique; et la chaleur absorbée par le flux gazeux est cédée à l'agent de refroidissement liquide réchauffé par le laitier (39).

2. Procédé selon revendication 1, caractérisé en ce que l'agent de refroidissement liquide circule dans un circuit fermé (9, 11, 12, 13, 14, 15, 16, 17, 18, 8, 4) sous une pression élevée.

3. Procédé selon une des revendications 1 ou 2, caractérisé en ce que le flux gazeux circule dans un circuit fermé (28, 27, 29, 30, 11, 32, 26, 20, 2).

4. Dispositif pour la mise en oeuvre du procédé selon revendications 1 à 3, comportant un refroidisseur (4; 40, 41) traversé par un agent de refroidissement liquide et présentant une cavité (8), de préférence un tambour refroidisseur; au moins une conduite (7, 42, 43) d'alimentation en laitier atteignant la surface (5) du refroidisseur; un réservoir (2) sensiblement vertical, traversé par le laitier (39) détaché de la surface (5) du refroidisseur (4; 40, 41), avec une conduite d'entrée du gaz de refroidissement (26) débouchant au voisinage de son extrémité inférieure (19) et une conduite de sortie du gaz de refroidissement (29) débouchant au voisinage de son extrémité supérieure (1) et reliée à un échangeur de chaleur (11) d'un cycle thermodynamique, ledit dispositif étant caractérisé en ce que la cavité (8) du refroidisseur (4; 40, 41) est reliée à un échangeur de chaleur (12) d'un cycle thermodynamique par une dérivation (9) de l'agent de refroidissement liquide débouchant dans la cavité (8); et l'échangeur de chaleur (11) du cycle thermodynamique du gaz de refroidissement est traversé par la dérivation (9) de l'agent de refroidissement liquide.

5. Dispositif selon revendication 4, caractérisé en ce que le refroidisseur est constitué par deux cylindres de laminage direct (40, 41), entraînés en sens contraire.

6. Dispositif selon une des revendications 4 ou 5, caractérisé en ce que le refroidisseur (4; 40, 41) est monté dans le réservoir (2), à proximité de son extrémité supérieure (1).

7. Dispositif selon revendications 4 à 6, caractérisé en ce que la dérivation (9) de l'agent de refroidissement liquide est reliée à une conduite (18) d'alimentation en liquide de refroidissement débouchant dans la cavité (8) du refroidisseur (4; 40, 41) pour former un circuit fermé.

8. Dispositif selon revendications 4 à 7, caractérisé en ce que la conduite (26) d'entrée du gaz de refroidissement est reliée par l'échangeur de chaleur (11) à la conduite (29) de sortie du gaz de refroidissement pour former un circuit fermé.

9. Dispositif selon revendications 4 à 8, caractérisé en ce que le refroidisseur (4; 40, 41) est muni de saillies et d'évidements (33) suivant la direction circonférentielle.

10. Dispositif selon revendication 9, caractérisé en ce que les évidements sont réalisés sous forme de rainures (33) qui s'étendent suivant la circonférence du refroidisseur (4; 40, 41), avec une section croissant vers la surface (5).

11. Dispositif selon revendications 5 à 10, caractérisé en ce que les surfaces (5) des cylindres de laminage direct (40, 41) sont munies d'évidements (47) en regard, qui se complètent deux par deux pour former les cavités de moulage entièrement fermées.

12. Dispositif selon revendication 11, caractérisé en ce que les évidements (47) sont hémisphériques.

13. Dispositif selon revendications 4 à 12, caractérisé en ce que le réservoir (2) comporte à son extrémité inférieure (19) une chambre (20) d'entrée du gaz de refroidissement, de section supérieure à celle du réservoir.

14. Dispositif selon revendication 13, caractérisé en ce qu'un dispositif d'évacuation du laitier (22), tel que des cylindres dentés, est prévu à l'extrémité inférieure de la chambre (20) d'entrée du gaz de refroidissement; et une autre conduite de gaz (24) débouche au-dessous du dispositif d'évacuation du laitier (22) et permet d'insuffler le gaz sous une pression supérieure à celle régnant dans la chambre (20) d'entrée du gaz de refroidissement.

15. Dispositif selon revendications 4 à 14, caractérisé en ce que le refroidisseur (4; 40, 41) est recouvert par rapport à l'intérieur du réservoir par un bouclier thermique (17) refroidi par liquide et relié à la cavité (8) du refroidisseur (4; 40, 41).

## FIG.1

FIG.3

FIG.2

FIG.4

FIG.5

FIG.6

FIG.7